# EUROPÄISCHE PATENTSCHRIFT

(11) **EP 2 893 249 B1**
(45) Veröffentlichungstag und Bekanntmachung des Hinweises auf die Patenterteilung: **12.10.2016**
(21) Anmeldenummer: 13791718.3
(22) Anmeldetag: 29.08.2013
(51) Int. Cl.: F21S 8/10, F21V 8/00

(54) **LEUCHTEINHEIT FÜR EINEN SCHEINWERFER**
LIGHTING UNIT FOR A HEADLIGHT
UNITÉ D'ÉCLAIRAGE DESTINÉE À UN PROJECTEUR

(30) Priorität: 03.09.2012 AT 503542012
(43) Veröffentlichungstag der Anmeldung: 15.07.2015
(73) Patentinhaber: Zizala Lichtsysteme GmbH, 3250 Wieselburg (AT)
(72) Erfinder: TAUDT, Lukas, 3250 Wieselburg (AT); BÖHM, Gerald, A-3370 Ybbs (AT); PLANK, Josef, A-3251 Purgstall/Erlauf (AT)
(74) Vertreter: Patentanwaltskanzlei Matschnig & Forsthuber OG
(86) Internationale Anmeldenummer: PCT/AT2013/050168
(87) Internationale Veröffentlichungsnummer: WO 2014/032071

(56) Entgegenhaltungen:
- EP-A2- 2 103 867
- EP-A2- 2 280 215
- WO-A1-2011/121488
- DE-A1-102008 013 603
- JP-A- 2011 249 183
- US-A- 5 931 576
- US-A1- 2006 203 486

## Beschreibung

Die Erfindung betrifft eine Leuchteinheit für einen Scheinwerfer, insbesondere einen Kraftfahrzeugscheinwerfer, bestehend aus einer Mehrzahl von Lichtquellen, einer Lichtführungseinheit mit einer Mehrzahl von Lichtführungen und einer nachgeschalteten Projektionslinse mit einer Brennebene, wobei jede Lichtführung je eine Lichtauskoppelfläche aufweist.

Derartige Leuchteinheiten sind im Fahrzeugbau gebräuchlich (siehe zum Beispiel WO 2011/121488 A1) und dienen beispielsweise der Abbildung von blendfreiem Fernlicht, indem das Licht, das in der Regel von einer Mehrzahl von künstlichen Lichtquellen ausgestrahlt wird und von einer entsprechenden Mehrzahl von nebeneinander angeordneten Lichtführungen in Abstrahlrichtung gebündelt wird. Die Lichtführungen weisen einen relativ geringen Querschnitt auf und senden das Licht der ihnen je zugeordneten einzelnen Lichtquellen daher sehr konzentriert in die Abstrahlrichtung aus. In der AT 510 437 A4 ist in diesem Zusammenhang ein Lichtmodul offenbart, welches eine Lichtführung in Form eines Lichtleiters, dort als Lichttunnel bezeichnet, sowie eine Mehrzahl von Lichtquellen aufweist.

Einerseits ist die konzentrierte Abstrahlung der Lichtführungen erwünscht, um beispielsweise gesetzliche Vorgaben bezüglich der Hell-Dunkel-Linie des Abblendlichtes eines Kraftfahrzeugscheinwerfers zu erfüllen, andererseits entstehen dadurch störende Inhomogenitäten in Bereichen des Lichtbildes, in welchen eine gleichmäßige Ausleuchtung erwünscht ist, wie beispielsweise im Vorfeld eines Kraftfahrzeugscheinwerfers, weshalb Maßnahmen ergriffen wurden, um diese Inhomogenitäten zu reduzieren.

So können die Lichtquellen, wie auch die Lichtführungen, im Allgemeinen möglichst nahe aneinander angeordnet werden, um somit die weniger intensiv ausgeleuchteten Anteile im Lichtbild gering zu halten. Die Lichtquellen, wie auch die Lichtführungen, lassen sich allerdings aus technischen Gründen nicht beliebig nahe aneinander anordnen, weshalb weitere Maßnahmen notwendig sind, um die Homogenität der Lichtverteilung zu erhöhen. Bekannte Methoden sehen hierbei ein "Verwaschen" des Lichtbildes vor. Beispielsweise wird eine optische Linse zur Defokussierung der konzentrierten Abstrahlung eingesetzt, bei welcher die gesamte Lichtführungseinheit aus der Brennebene der optischen Linse gerückt wird. Auch sind optische Linsen bekannt, die spezielle Strukturen im µm- Bereich aufweisen, durch die eine Lichtstreuung erreicht werden kann, wobei die bei herkömmlichen optischen Linsen auftretende, nachteilige Farbverfälschung vorgebeugt wird.

Den beiden angeführten Maßnahmen, nämlich jenen zur Defokussierung sowie zur Lichtstreuung, ist dabei gemein, dass diese auf das gesamte Lichtbild des Scheinwerfers wirken. Der vorteilhaften Wirkung einer homogeneren Lichtverteilung steht daher der nachteilige Effekt einer unschärferen Abbildung sämtlicher Lichtführungen gegenüber, womit beispielsweise Vorgaben in Bezug auf die Hell-Dunkel-Linie des Abblendlichtes eines Kraftfahrzeugscheinwerfers nicht erreicht werden können, oder aber nachteilige Kompromisse zwischen homogenisierter bzw. gestreuter und fokussierter Abstrahlung eingegangen werden müssen.

Es ist daher eine Aufgabe der Erfindung, eine Leuchteinheit für Scheinwerfer zu schaffen, die einerseits lokal eine homogene Lichtverteilung, beispielsweise im Vorfeld, ermöglicht, und gleichzeitig eine konzentrierte Abstrahlung der Lichtführungen in jenen Bereichen weiterhin zulässt, in denen dies erwünscht und oder notwendig ist.

Die Lösung dieser Aufgabe wird gemäß Anspruch 1 erreicht, indem
a.) die Lichtauskoppelfläche zumindest zweier benachbarter Lichtführungen in Bezug auf die Brennebene der Linse zueinander versetzt sind, und/oder
b.) zumindest jeweils zwei zueinander benachbarte Lichtführungen in einem Kontaktbereich einander entlang einer Erstreckung kontaktieren, wobei die jeweiligen Erstreckungen, gemessen in Bezug auf die Brennebene, der Linse voneinander abweichen.

Dies ermöglicht eine effiziente, kostengünstige und robuste lokale unschärfere Abbildung einzelner Lichtauskoppelflächen bzw. deren zugeordneter Lichtführungen, womit in den gewünschten Bereichen ein homogenes Lichtbild (Homogenisierung) in einfacher Weise realisiert werden kann. Solche Bereiche liegen beispielsweise in einem horizontalen Abschnitt eines Vorfelds eines Scheinwerfers, wohingegen eine Ausleuchtung eines Fernlichtbereichs möglichst konzentriert und gerichtet erfolgen soll, um beispielsweise entgegenkommende Fahrzeuge gezielt auszublenden.

In einer besonders einfachen Ausführungsform der Erfindung ist dabei vorgesehen, dass die Lichtauskoppelflächen zumindest zweier zumindest abschnittsweise übereinander angeordneter Lichtführungen in Bezug auf die Brennebene zueinander versetzt sind.

Um ein möglichst weitläufiges sowie homogenes Lichtbild zu erhalten, sind in einer vorteilhaften Ausführungsform die Lichtführungen in zumindest zwei übereinander angeordneten Reihen angeordnet. Die Lichtführungen sollten dabei möglichst nahe aneinander geführt werden, womit Inhomogenitäten im Lichtbild reduziert werden.

Um lokale Inhomogenitäten im Lichtbild zusätzlich zu reduzieren, ist in einer zweckmäßigen Variante vorgesehen, dass sämtliche Lichtauskoppelflächen einer Reihe gegenüber den Lichtauskoppelflächen einer unterhalb angeordneten Reihe in Bezug auf die Brennebene versetzt sind. Da den Lichtauskoppelflächen eine Projektionslinse nachgeschaltet ist, die den eintretenden Strahlengang invertiert, führt ein Versetzen der oberen Reihe zu einer Homogenisierung der Abstrahlung eines "unteren" Abschnitts des Lichtbildes, also üblicherweise des Vorfeldes eines Scheinwerfers. Dies ermöglicht beispielsweise eine homogenere Ausleuchtung des Vorfeldes eines Scheinwerfers. Sämtliche Positionsangaben beziehen sich dabei, sofern nicht anders angeführt, auf den Scheinwerfer sowie dessen Komponenten im eingebauten Zustand, insbesondere auf den in einem Fahrzeug eingebauten Zustand, das sich in horizontaler Lage befindet.

Erfahrungsgemäß ist der Aufbau des erfindungsgemäßen Scheinwerfers besonders effizient, wenn die Lichtführungen in genau drei übereinander angeordneten Reihen angeordnet sind. Bei einer solchen Anordnung kann beispielsweise die obere Reihe das Vorfeld des Scheinwerfers ausleuchten, die mittlere Reihe zur Ausleuchtung im Bereich der Hell-Dunkel- Linie (bzw. der Hell-Dunkel-Grenze) dienen, und die untere Reihe die Ausleuchtung des Fernlichtbereiches des Scheinwerfers bezwecken.

Um eine definierte lokale Homogenisierung im Lichtbild des Vorfelds des erfindungsgemäßen Scheinwerfers zu erreichen, ist in einer Weiterbildung der Erfindung vorgesehen, dass die Lichtauskoppelflächen der obersten Reihe der Lichtführungen um einen festgelegten Abstand in Bezug auf die Brennebene entgegen einer Hauptabstrahlrichtung versetzt sind. Auch können alternativ die oberen beiden Reihen gemeinsam versetzt sein, wenn beispielsweise die oberen beiden Reihen an der Ausleuchtung des Vorfeldes beteiligt sind. Generell können beliebige Varianten gewählt werden, in denen eine Homogenisierung des Lichtbildes erwünscht ist. So könnte ebenso jene Reihe oder vorgegebene Anzahl an Lichtauskoppelflächen versetzt sein, die an der Ausbildung des Fernlichtes beteiligt sind. Die Hauptabstrahlrichtung ist jene Richtung, in der die Lichtstärke der Abstrahlung der jeweiligen Lichtauskoppelfläche üblicherweise ein Maximum erreicht. Diese liegt im Allgemeinen normal auf die Brennebene der nachgeschalteten Projektionslinse.

Um eine effiziente und einfache Abstrahlung der Lichtführungen zu gewährleisten, ist in einer vorteilhaften Ausführungsform jede Lichtauskoppelfläche durch einen ebenen, abstrahlseitigen Endbereich der zugehörigen Lichtführung gebildet, der durch das abstrahlseitige Ende von einer die Lichtführung begrenzenden Wand gebildet ist. Bei den Lichtführungen handelt es sich dabei um Reflektoren, die hohl ausgeführt sind und deren Reflektorflächen reflektierend beschichtet, insbesondere mit Aluminium beschichtet sind.

Im Detail kann dabei jede Wand aus zwei im Wesentlichen vertikalen Wandabschnitten und zwei im Wesentlichen horizontalen Wandabschnitten bestehen, die im Querschnitt ein Rechteck bilden, womit ein besonders kostengünstiger und effektiver Aufbau der Lichtführungen realisiert ist.

In einer Weiterbildung der Erfindung ist dabei vorgesehen, dass übereinander angeordnete Lichtführungen aneinander angrenzen und über einen gemeinsamen horizontalen Wandabschnitt verfügen, womit ein besonders kompakter Aufbau der Lichtführungseinheit ermöglicht wird.

Um eine lokale horizontale Homogenisierung in besonders einfacher Art und Weise zu realisieren, sind in einer vorteilhaften Variante die vertikalen Wandabschnitte zumindest einer Lichtführung in Bezug auf zumindest einen horizontalen Wandabschnitt der zumindest einen Lichtführung stufenartig um eine Länge a versetzt.

Um eine konstante, lokale Homogenisierung zu erreichen, kann dabei in einer Weiterbildung der Erfindung vorgesehen sein, dass die vertikalen Wandabschnitte zumindest einer Lichtführung in Bezug auf genau einen horizontalen Wandabschnitt genau einer Lichtführung stufenartig um eine Länge a versetzt sind.

Ein Wert der Länge a von beispielsweise 0,5 mm kann bereits eine ausreichende Homogenität ermöglichen. Hier tritt bereits eine Überlappung der Abbildung der einzelnen Lichtauskoppelflächen auf. Soll die Homogenität weiter erhöht werden, so ist die Länge a zu vergrößern. Die Vergrößerung der Länge a kann beispielsweise in einzelnen Schritten mit einer Schrittweite von 1/10 mm erfolgen. Soll die Homogenität verringert werden, so kann die Länge a in gleicher Weise reduziert werden. Der exakte Wert der Länge a wird abhängig von der zu erreichenden Homogenität sowie dem damit im Zusammenhang stehenden gesamten optischen System (Lichtquelle, Lichtführung, Lichtauskoppelfläche, Projektionslinse) festgelegt. Gemäß einer erfindungsgemäßen Alternative sind die Lichtführungen als Lichtleiter ausgeführt. Unter einem Lichtleiter ist im Sinne der vorliegenden Erfindung eine Struktur zu verstehen, in der einfallendes Licht entlang der Erstreckung des Lichtleiters durch Totalreflexion an den Wänden reflektiert wird, wobei der Lichtleiter als Vollkörper ausgeführt ist. In diesem Zusammenhang ist es bevorzugt, dass die Lichtleiter aus einem transparenten Kunststoff gefertigt sind. Alternativ kann dieser aus Glas oder auch aus einem beliebigen anderen Material, beispielsweise Silikon, hergestellt sein, dass zur Lichtleitung geeignet ist. In diesem Zusammenhang ist es vorteilhaft, wenn die Lichtauskoppelflächen Teil zumindest einer Lichtauskopplungsebene sind, wobei einzelne Lichtauskoppelflächen aneinander angrenzen. Damit ist ein besonders einfacher technischer Aufbau einer erfindungsgemäßen Leuchteinheit realisiert, die kostengünstig herstellbar ist.

In einer Weiterbildung der alternativen Ausführungsvariante der Erfindung ist vorgesehen, dass die Lichtauskoppelflächen Teil einer ersten und zumindest einer zweiten Lichtauskopplungsebene sind, wobei einzelne Lichtauskoppelflächen aneinander angrenzen, wobei die erste und die zweite Lichtauskopplungsebene zueinander in Bezug auf die Brennebene versetzt sind.

Dabei ist es besonders vorteilhaft, wenn die erste Lichtauskopplungsebene und genau eine zweite Lichtauskopplungsebene zueinander in Bezug auf die Brennebene versetzt sind, indem die zweite Lichtauskopplungsebene in Bezug auf die Brennebene entgegen einer Hauptabstrahlrichtung um die Länge c versetzt ist.

Ein Wert der Länge c von beispielsweise 0,5 mm kann bereits eine ausreichende Homogenität ermöglichen. Hier tritt bereits eine Überlappung der Abbildung der einzelnen Lichtauskoppelflächen auf. Soll die Homogenität weiter erhöht werden, so ist die Länge c zu vergrößern. Die Vergrößerung der Länge c kann beispielsweise in einzelnen Schritten mit einer Schrittweite von 1/10 mm erfolgen. Soll die Homogenität verringert werden, so kann die Länge c in gleicher Weise reduziert werden. Der exakte Wert der Länge c wird abhängig von der zu erreichenden Homogenität sowie dem damit im Zusammenhang stehenden gesamten optischen System festgelegt. Eine weitere Möglichkeit der lokalen (bevorzugt horizontalen) Homogenisierung ist durch die obig angeführten Merkmale b.), wie in Anspruch 1 definiert, gegeben. Die exakten Werte der Längen b und b' werden dabei abhängig von der zu erreichenden Homogenität sowie dem damit im Zusammenhang stehenden gesamten optischen System festgelegt.

Darüber hinaus kann unmittelbar an den Lichtauskoppelflächen einzelner Lichtleiter eine Licht streuende Optik vorgesehen sein, womit eine zusätzliche Möglichkeit zur lokalen Homogenisierung gegeben ist. Unter der Ausdrucksweise "unmittelbar" wird in diesen Zusammenhang eine Anordnung verstanden, in der die Licht streuende Optik die Lichtauskoppelflächen entweder direkt kontaktiert oder von dieser (beispielsweise aus Montagegründen) geringfügig distanziert ist. Wesentlich dabei ist, dass die Licht streuende Optik ausschließlich auf die einzelne Lichtauskoppelfläche wirken kann, an der die Licht streuende Optik vorgesehen ist. Es kann sich bei der Licht streuenden Optik um beliebige, dem Fachmann bekannte optische Elemente handeln, die eine unscharfe Abbildung eintretender Lichtstrahlen ermöglichen. Bevorzugt werden zu diesem Zwecke Zylinderlinsen eingesetzt, da diese eine horizontale Streuung der eintretenden Lichtstrahlen ermöglichen. Alternativ können ebenso bei den als Reflektoren ausgeführten Lichtführungen zusätzliche Optiken vorgesehen sein, die zwischen der Projektionslinse und der Auskoppelfläche 4 des jeweiligen Reflektors angeordnet sind, und eine entsprechende zusätzliche Streuung der Lichtstrahlen bewirken.

Die Erfindung samt weiteren Vorteilen ist im Folgenden an Hand mehrerer beispielhaften, nicht einschränkenden Ausführungsformen näher erläutert, die in den Figuren veranschaulicht sind. Hierbei zeigt
Fig. 1 eine perspektivische Darstellung einer ersten Ausführungsform einer erfindungsgemäßen Lichtführungseinheit,
Fig. 2 eine perspektivische Detaildarstellung der Fig. 1,
Fig. 3 eine perspektivische, vertikale Schnittdarstellung der in Fig. 1 dargestellten Lichtführungseinheit,
Fig. 4 das Lichtbild einer erfindungsgemäßen Lichtführungseinheit,
Fig. 5 eine perspektivische Darstellung einer zweiten Ausführungsform einer erfindungsgemäßen Lichtführungseinheit von schräg hinten,
Fig. 6 eine perspektivische, vertikale Schnittdarstellung der in Fig. 5 dargestellten Lichtführungseinheit,
Fig. 7 in einer horizontalen, ebenen Schnittdarstellung entlang der Schnittebene101 der Fig. 6 einen Strahlengang von Lichtstrahlen,
Fig. 8 in einer horizontalen, ebenen Schnittdarstellung entlang der Schnittebene100 der Fig. 6 einen Strahlengang von Lichtstrahlen und
Fig. 9 eine vertikale Schnittdarstellung einer dritten Ausführungsform einer erfindungsgemäßen Lichtführungseinheit.

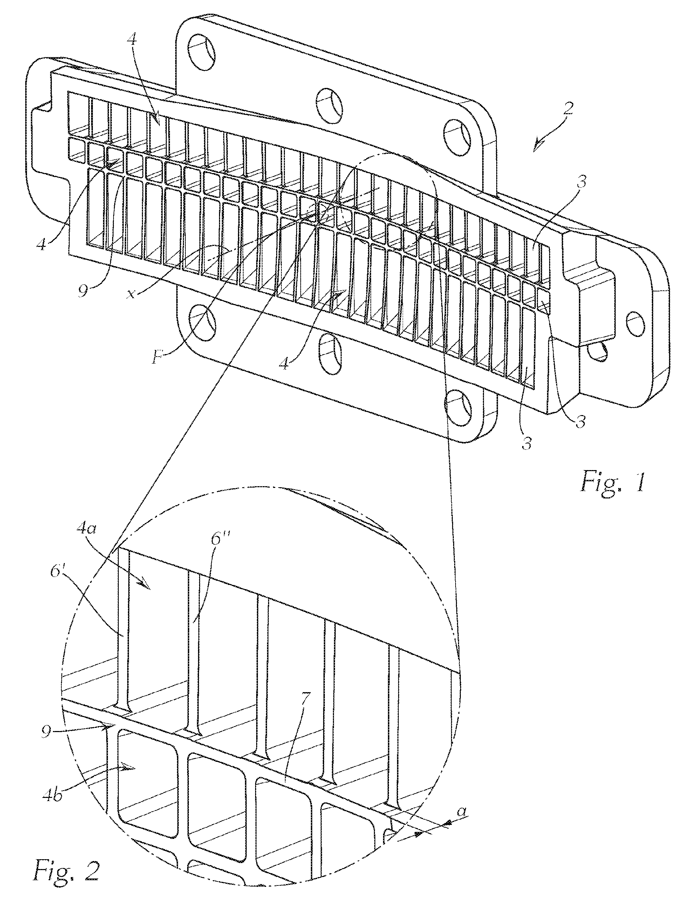

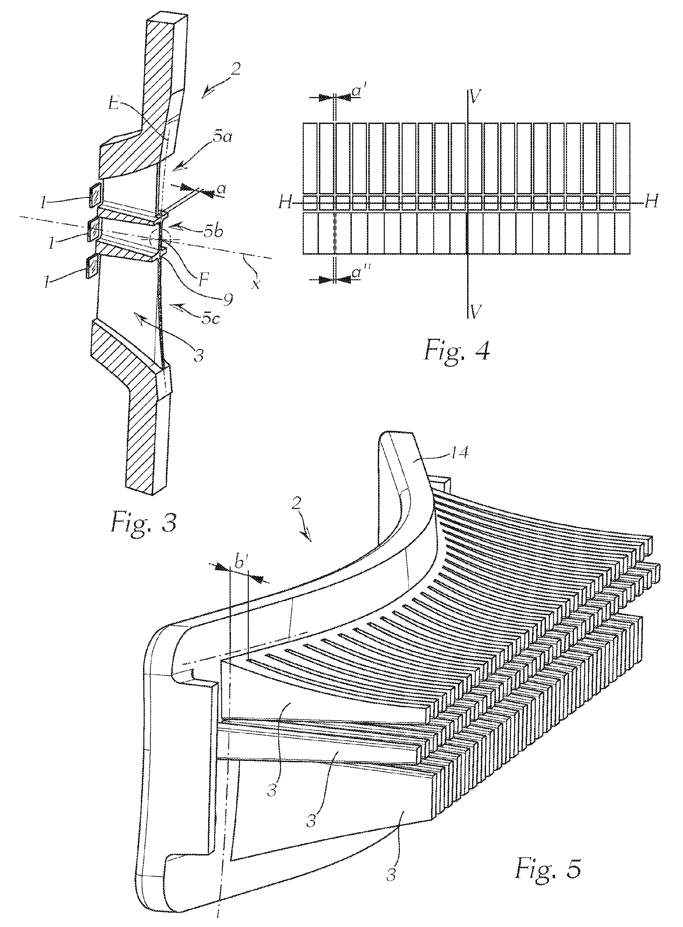

In Fig. 1 ist eine erste Ausführungsform einer Leuchteinheit mit einer erfindungsgemäßen Lichtführungseinheit 2 dargestellt, in welcher Lichtführungen 3 nebeneinander angeordnet sind. Die Lichtführungen 3 sind darin als Reflektoren ausgeführt und weisen Lichtauskoppelflächen 4 auf, die dazu eingerichtet sind, das Licht in Richtung einer nachgeschalteten, nicht dargestellten Projektionslinse abzustrahlen. Die Lichtführungen 3 sind dabei im Wesentlichen in Richtung einer der Projektionslinse zugehörigen optischen Achse x ausgerichtet, wobei die Lichtauskoppelflächen 4 (mit Ausnahme der Lichtauskoppelflächen 4 die eine obere Reihe bilden) in der (in Fig. 3 dargestellten) Brennebene E der Projektionslinse liegen. Dementsprechend befindet sich der der Projektionslinse zugehörige Brennpunkt F direkt an einer Lichtauskoppelfläche 4. Die Brennebene E ist darin entsprechend einer Bildfeldwölbung sowohl in vertikaler als auch in horizontaler Richtung leicht gekrümmt. Die Lichtführungen 3 sind darin in drei zentriert übereinander gestapelten Reihen angeordnet, wobei deren Lichtauskoppelflächen 4 durch eine die Lichtführungen 3 begrenzende Wand 9 voneinander abgetrennt sind.

Fig. 2 zeigt ein Detail der Fig. 1. Es sind darin zwei exemplarische Lichtauskoppelflächen 4a und 4b bezeichnet, wobei die Lichtauskoppelfläche 4a durch zwei vertikale Wandabschnitte 6' und 6" sowie einen horizontalen Wandabschnitt 7 von den umgebenden Lichtauskoppelflächen 4, insbesondere der Lichtauskoppelfläche 4b abgegrenzt ist. Die vertikalen Wandabschnitte 6' und 6" der Lichtauskoppelfläche 4a sind dabei in Bezug auf den unterhalb angeordneten horizontalen Wandabschnitt 7 stufenartig um die Länge a nach hinten, also entgegen die Hauptabstrahlrichtung versetzt. Alternativ ist auch eine Variante möglich, in der die Wandabschnitte 6' und 6" unterschiedlich stark versetzt sind, bzw. in der der Versatz entlang der Erstreckung der Wandabschnitte 6' und 6" variiert. Die Lichtauskoppelfläche 4a, sowie sämtliche Lichtauskoppelflächen 4 der obersten Reihe, sind, wie in Fig. 1 erkennbar, um den gleiche Länge a stufenartig in Bezug auf den unterhalb angeordneten horizontalen Wandabschnitt 7 versetzt, womit die mit der Lichtaustrittsfläche 4a in einer Reihe liegenden Lichtaustrittsflächen 4 gleichermaßen in Bezug auf die Brennebene E (siehe Fig. 3) versetzt sind und in weiterer Folge jeweils austretenden Lichtstrahlen gleichermaßen horizontal homogenisiert werden. Hierdurch wird ein horizontales "Verwaschen" des Lichtbildes realisiert. Es sei an dieser Stelle erwähnt, dass alternativ durch Versetzen des horizontalen Wandabschnittes 7 eine vertikale Streuung erreicht werden kann. Auch könnten sowohl die vertikalen Wandabschnitte 6', 6" und sowie der horizontale Wandabschnitt 7 versetzt werden, womit eine Streuung sowohl in vertikaler als auch in horizontaler Richtung bewirkt wird.

Fig. 3 zeigt in einer perspektivischen, vertikalen Schnittdarstellung der ersten Ausführungsform der Lichtführungseinheit 2 entsprechende Lichtquellen 1, die hinter der Lichtführungseinheit 2 und somit gegenüber der nicht dargestellten Projektionslinse angeordnet sind. Die von den Lichtquellen 1 emittierten Lichtstrahlen werden durch die Lichtführungen 3 geleitet, treten durch die Lichtauskoppelflächen 4 aus der Lichtführungseinheit 2 aus, um durch die Projektionslinse beispielsweise in einen Bereich vor dem Fahrzeug projiziert zu werden. Im Rahmen der Erfindung bevorzugte Lichtquellen sind insbesondere lichtemittierende Dioden (LEDs), die sich durch eine hohe Lichtleistung bei einer sehr geringen Baugröße auszeichnen. Für die genannte Anwendung übliche LEDs weisen Kantenlängen im Bereich von einem Millimeter und weniger auf und werden in einer Matrix, d.h. in Gruppen eventuell auf einer gemeinsamen Platine unmittelbar nebeneinander angeordnet, wobei die äußere Form dieser Matrix bzw. Gruppen vorzugsweise in etwa dem Lichtbild entspricht, das projiziert werden soll. Nachdem die Lichtführungen 3 in der Lichtführungseinheit 2 ebenfalls unmittelbar übereinander (sowie im Allgemeinen auch nebeneinander) angeordnet sind, um bei einer gegebenen Größe der einzelnen Lichtquellen 1 ein homogenes Lichtbild zu erzeugen, sind die Wände 9 zwischen den einzelnen Lichtführungen zwangsläufig sehr dünn. Die Lichtauskoppelflächen 4 sind darin im Detail durch abstrahlseitige Endbereiche 5a, 5b, 5c usw. gebildet, die durch das abstrahlseitige Ende von der die Lichtführung 3 begrenzenden Wand 9 (beispielsweise der Wandabschnitte 6', 6" und 7 siehe Fig. 2) gebildet sind.

Fig. 4 zeigt beispielhaft ein Lichtbild, welches durch jede Ausführungsform der der erfindungsgemäßen Lichtführungseinheit 2 gewonnen werden kann. Es sind darin um eine horizontale Achse H und eine vertikale Achse V matrixförmig angeordnete Felder erkennbar, wobei jene Bereiche innerhalb der Felder einer hellen Ausleuchtung entsprechen, und jene Bereiche zwischen den Feldern entsprechend dunklere Bereiche im Lichtbild darstellen. Die Felder sind in drei Reihen angeordnet, wobei die Felder der oberen zwei Reihen in horizontaler Richtung durch einen dunkleren Bereich mit der Erstreckung a' voneinander beabstandet dargestellt sind. In der unteren Reihe ist der durch die erfindungsgemäße Leuchteinheit erzielte Effekt deutlich erkennbar: Nebeneinander angeordnete Felder berühren sich bzw. überlappen einander entlang einer Erstreckung a", was bedeutet, dass in diesen Bereichen unerwünschte Inhomogenitäten vermieden werden.

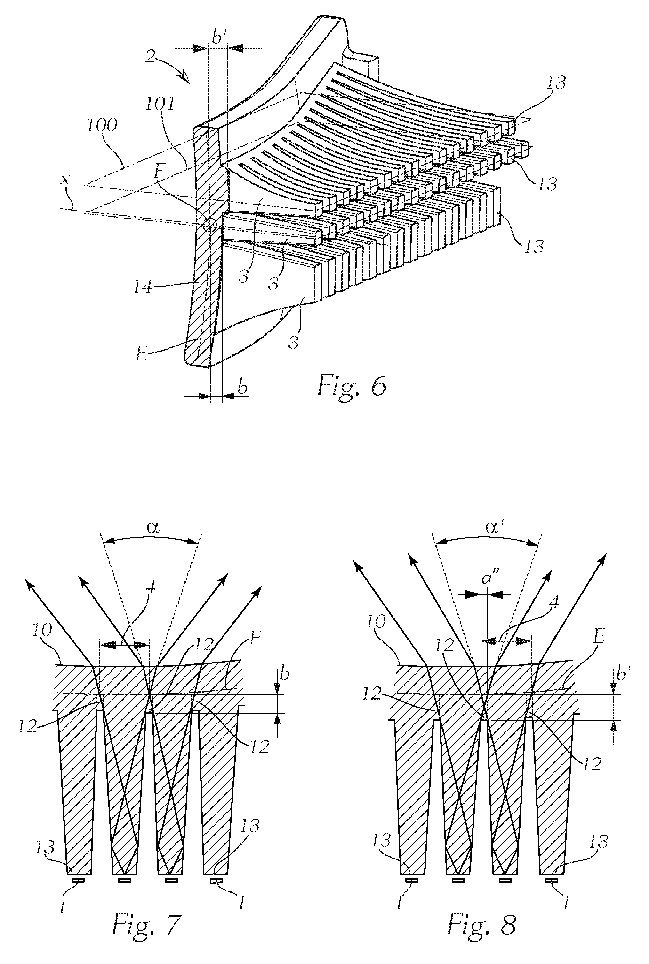

In Fig. 5 ist eine perspektivische Darstellung einer zweiten Ausführungsform einer erfindungsgemäßen Lichtführungseinheit 2 dargestellt. Im Vergleich zur ersten Ausführungsform sind die Lichtführungen 3 darin nicht als Reflektoren, sondern als Lichtleiter ausgeführt, die, wie eingangs beschrieben, aus Kunststoff, Glas oder beliebigen anderen zur Lichtleitung geeigneten Material ausgeführt sein können. Die Lichtleiter sind darin als Vollkörper ausgeführt, was bedeutet, dass der Lichtleiter aus einem einzigen, durchgehenden optischen Medium besteht und die Lichtleitung innerhalb dieses Mediums erfolgt. Sie sind, ähnlich wie in der ersten Ausführungsform, in drei übereinander angeordneten Reihen ausgeführt. Die Lichtführungen 3 bzw. die Lichtleiter verlaufen abstrahlseitig zu einer gemeinsamen Stirnplatte 14, die abstrahlseitig durch die Lichtauskopplungsebene 10 (siehe Fig. 7 und 8) begrenzt ist.

Fig. 6 zeigt einen vertikalen Schnitt der zweiten Ausführungsform gemäß Fig. 5. Die abstrahlseitige Oberfläche der Stirnplatte 14 ist (entsprechend einer Bildfeldwölbung) gekrümmt, wobei die Brennebene E innerhalb der Stirnplatte 14 zu liegen kommt. Darin ist eine Lichtführungseinheit 2 mit Lichtführungen 3 aus Lichtleitern gezeigt, die abstrahlseitig zu einer gemeinsamen Stirnplatte 14 zusammen laufen und stirnseitig in eine erste Lichtauskopplungsebene 10 münden. Die Lichtauskopplungsebene 10 setzt sich dabei aus den einzelnen, den Lichtleitern innerhalb der jeweiligen Reihe zugeordneter und jeweils unmittelbar nebeneinander angeordneten Lichtauskoppelflächen 4 (siehe Fig. 7 und 8, allerdings in deren Ausdehnung im Wesentlichen analog zu Fig. 1. Eine Homogenisierung wird erfindungsgemäß dadurch erreicht, dass jeweils zumindest zwei zueinander benachbarte Lichtführungen 3 in einem Kontaktbereich 12 einander entlang einer Erstreckung b und b' (siehe Fig. 7 und 8) kontaktieren, wobei die jeweiligen Erstreckungen b und b', gemessen in Bezug auf die Brennebene E, voneinander abweichen. So ist Fig. 6 entnehmbar, dass die Lichtleiter in drei Reihen angeordnet sind, wobei jene Lichtleiter, die in der oberen Reihe nebeneinander angeordnet sind, einander bereits vor der Stirnplatte 14 kontaktieren, womit die Lichtdurchmischung früher erfolgt, als in den unterhalb angeordneten Reihen. Das von den (in Fig. 6 nicht dargestellten) Lichtquellen 1 emittierte Licht gelangt dabei über eine Lichteintrittsfläche 13 in den Lichtleiter.

Fig. 7 und Fig. 8 zeigen Schnittdarstellungen der oberen bzw. der mittleren Reihe der Lichtleiter gemäß Fig. 6. So ist in Fig. 7 ein Schnitt durch die mittlere Reihe der Lichtleiter dargestellt, wobei die Lichtleiter einander entlang der Erstreckung b, gemessen in Bezug auf die Brennebene E, kontaktieren. Fig. 7 zeigt weiters von den Lichteintrittsflächen 13 ausgehende beispielhafte Strahlengänge, wobei zwei exemplarische Strahlen vor deren Austritt aus der Stirnfläche einen ersten Winkel α einschließen. In Fig. 8 ist ein Schnitt durch die obere Reihe der Lichtleiter gemäß Fig. 6 dargestellt. Darin ist deutlich erkennbar, dass der Kontaktbereich zwischen den Lichtleitern eine größere Erstreckung b' aufweist, als jene, die in Fig. 7 erkennbar ist (b). Die in den Lichtleitern geführten Lichtstrahlen können sich daher früher vermengen, womit eine Aufweitung der durch die Stirnfläche bzw. die Lichtauskopplungsebene 10 tretenden Lichtstrahlen erfolgt. Der von den in Fig. 8 gezeigten exemplarischen Lichtstrahlen eingeschlossene Winkel α' ist daher größer als der Winkel α, wobei die Lichtstrahlen einander entlang der (in Fig. 4 gezeigten) Erstreckung a" entlang der Brennebene E überlappen können. Somit ist eine horizontale, lokale Homogenisierung der Abstrahlung der oberen Lichtleiterreihe realisiert (und womit ebenso ein, wie in Fig. 4 gezeigtes, homogeneres Lichtbild geschaffen werden kann).

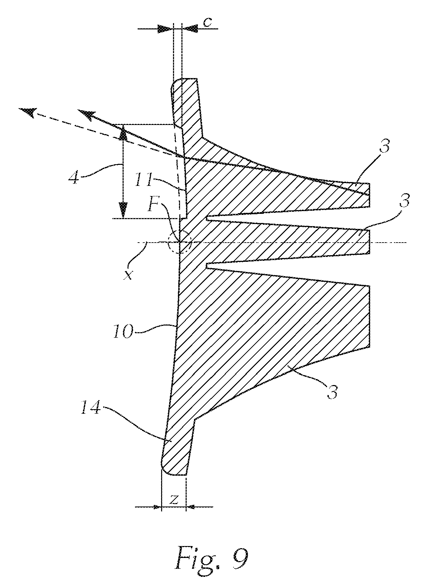

Fig. 9 zeigt eine dritte Ausführungsform einer erfindungsgemäßen Lichtführungseinheit 2. Die Lichtführungen 3 bzw. die Lichtleiter verlaufen wiederum abstrahlseitig zu einer gemeinsamen Stirnplatte 14, die abstrahlseitig durch die Lichtauskopplungsebenen 10 und 11 begrenzt ist. Die abstrahlseitige Oberfläche der Stirnplatte 14 ist (entsprechend einer Bildfeldwölbung) gekrümmt. Die Stirnplatte 14 hat dabei die Dicke z. Im Unterschied zur zweiten Ausführungsform existieren zwei Lichtauskopplungsebenen, nämlich eine erste und eine zweite Lichtauskopplungsebene 10 und 11, die zueinander in Bezug auf die Brennebene E um die Länge c versetzt sind. Die erste Lichtauskopplungsebene 10 liegt dabei in der Brennebene E. Beide Lichtauskopplungsebenen 10 und 11 setzen sich aus den einzelnen, den Lichtleitern innerhalb der jeweiligen Reihe zugeordneten und jeweils unmittelbar nebeneinander angeordneten Lichtauskoppelflächen 4 zusammen, wobei jede Lichtauskoppelfläche 4 entweder der ersten oder der zweiten Lichtauskopplungsebene 10 oder 11 zugehörig ist. Sämtliche der Lichtauskopplungsebene 11 zugehörige Lichtauskoppelflächen 4 weisen die gleiche Beabstandung zur Brennebene E auf. In einer alternativen Ausführungsform kann auch eine beliebige Mehrzahl an Lichtauskopplungsebenen vorgesehen sein, in Abhängigkeit davon, welche Bereiche im Lichtbild homogener gestaltet werden sollen.

Es sei an dieser Stelle angemerkt, dass in dieser Anmeldung unter der Ausdrucksweise, dass "die Objekte A und B in Bezug auf die Brennebene E zueinander (oder voneinander) um eine vorgegebene Länge (oder Abstand) versetzt sind", verstanden wird, dass die Normalabstände der Objekte A und B zur Brennebene E voneinander um die vorgegebene Länge (oder den Abstand) abweichen.

Auch sind Mischvarianten der drei genannten Ausführungsformen möglich. So kann beispielsweise die zweite Ausführungsform mit der dritten Ausführungsform in besonders einfacher Weise kombiniert werden, da in beiden Varianten Lichtleiter zur Anwendung kommen. Auch kann es vorgesehen sein, dass einzelnen Lichtauskoppelflächen 4 zugehörige Erstreckungen b, bzw. die Längen a und c von jenen benachbarter Lichtauskoppelflächen 4 abweichen, bzw. dass diese ebenso innerhalb einzelner Lichtauskoppelflächen 4 lokal variieren.

Weiters kann unmittelbar an den Lichtauskoppelflächen 4 einer beliebigen Ausführungsform zusätzlich eine Licht streuende Optik vorgesehen sein, die eine horizontale Streuung der Lichtstrahlen bewirkt (beispielsweise eine Zylinderoptik, die ausschließlich in horizontaler Richtung streut) und somit die Lichthomogenisierung zusätzlich unterstützt. Dies ist insbesondere bei den auf Lichtleitern basierenden Ausführungsformen einfach realisierbar.

## Patentansprüche

1. Leuchteinheit für einen Scheinwerfer, insbesondere einen Kraftfahrzeugscheinwerfer, bestehend aus einer Mehrzahl von Lichtquellen (1), einer Lichtführungseinheit (2) mit einer Mehrzahl von Lichtführungen (3) und einer nachgeschalteten Projektionslinse mit einer Brennebene (E), wobei jede Lichtführung (3) je eine Lichtauskoppelfläche (4) aufweist, **dadurch gekennzeichnet, dass**
a.) die Lichtauskoppelfläche (4) zumindest zweier benachbarter Lichtführungen (3) in Bezug auf die Brennebene (E) zueinander versetzt sind, wobei die Lichtauskoppelflächen (4) Teil einer ersten und zumindest einer zweiten Lichtauskopplungsebene (10 und 11) sind, wobei die erste und die zweite Lichtauskopplungsebene (10 und 11) zueinander in Bezug auf die Brennebene (E) versetzt sind, wobei die Lichtführungen (3) in zumindest zwei übereinander angeordneten Reihen angeordnet sind und die Lichtauskoppelflächen (4) der obersten Reihe der Lichtführungen (3) um einen festgelegten Abstand in Bezug auf die Brennebene (E) entgegen einer Hauptabstrahlrichtung versetzt sind und/ oder
b.) die Lichtführungen (3) als Leitleiter ausgeführt sind, die als Vollkörper ausgeführt sind, die abstrahlseitig zu einer gemeinsamen Stirnplatte (14) zusammen laufen und stirnseitig in eine Lichtauskopplungsebene (10, 11) münden, wobei jeweils zwei zueinander benachbarte Lichtführungen (3) in einem Kontaktbereich (12) einander entlang einer Erstreckung (b, b') kontaktieren, wobei zumindest zwei der jeweiligen Erstreckungen (b und b'), gemessen in Bezug auf die Brennebene (E), voneinander abweichen.

2. Leuchteinheit nach Anspruch 1, **dadurch gekennzeichnet, dass** sämtliche Lichtauskoppelflächen (4a) einer Reihe gegenüber den Lichtauskoppelflächen (4b) einer unterhalb angeordneten Reihe in Bezug auf die Brennebene (E) versetzt sind.

3. Leuchteinheit nach Anspruch 1 oder 2, **dadurch gekennzeichnet, dass** die Lichtführungen (3) in genau drei übereinander angeordneten Reihen angeordnet sind.

4. Leuchteinheit nach einem der Ansprüche 1 bis 3, **dadurch gekennzeichnet, dass** die erste Lichtauskopplungsebene (10) und genau eine zweite Lichtauskopplungsebene (11) zueinander in Bezug auf die Brennebene (E) versetzt sind, indem die zweite Lichtauskopplungsebene (11) in Bezug auf die Brennebene (E) entgegen einer Hauptabstrahlrichtung versetzt ist.

5. Leuchteinheit nach einem der vorangegangen Ansprüche, **dadurch gekennzeichnet, dass** unmittelbar an den Lichtauskoppelflächen (4) eine Licht streuende, vorzugsweise ausschließlich horizontal streuende Optik vorgesehen ist.

## Claims

1. A lamp unit for a headlight, in particular a motor vehicle headlight, consisting of multiple light sources (1), a light guide unit (2) with multiple light guides (3), and a downstream projector lens with a focal plane (E), each light guide (3) having one light decoupling surface (4), **characterized in that**
a.) the light decoupling surfaces (4) of at least two adjacent light guides (3) are offset from one another with respect to the focal plane (E), the light decoupling surfaces (4) being part of a first and at least one second light decoupling planes (10 and 11), the first and the second light decoupling planes (10 and 11) being offset from one another with respect to the focal plane (E), the light guides (3) being arranged in at least two rows arranged on top of one another and the light decoupling surfaces (4) of the topmost row of light guides (3) being offset with respect to the focal plane (E) by a fixed distance in the direction opposite a main emission direction; and/or
b.) the light guides (3) are in the form of optical waveguides in the form of solid bodies, which converge to a common face plate (14) on the emission side and open into a light decoupling plane (10, 11) on the face side, each two adjacent light guides (3) making contact with one another along a length (b, b') in a contact zone (12), at least two of the respective lengths (b and b') diverging from one another when measured from the focal plane (E).

2. The lamp unit according to claim 1, **characterized in that** all light decoupling surfaces (4a) of one row are offset from the light decoupling surfaces (4b) of a row arranged below it with respect to the focal plane (E).

3. The lamp unit according to claim 1 or 2, **characterized in that** the light guides (3) are arranged in exactly three rows arranged on top of one another.

4. The lamp unit according to one of claims 1 through 3, **characterized in that** the first light decoupling plane (10) and exactly one second light decoupling plane (11) are offset from one another with respect to the focal plane (E) by the second light decoupling plane (11) being offset with respect to the focal plane (E) in the direction opposite a main emission direction.

5. The lamp unit according to one of the preceding claims, **characterized in that** a light scattering optical system, preferably an exclusively horizontally scattering optical system, is provided directly on the light decoupling surfaces (4).

## Revendications

1. Unité d'éclairage pour un phare, en particulier un phare de véhicule automobile, se composant d'une pluralité de sources de lumière (1), d'une unité de guides de lumière (2) ayant une pluralité de guides de lumière (3) et une lentille de projection en aval ayant un plan focal (E), chaque guide de lumière (3) présentant une face de découplage de lumière (4), **caractérisée par le fait que** :
a.) les faces de découplage de lumière (4) d'au moins deux guides de lumière (3) adjacents sont décalées l'une par rapport à l'autre par rapport au plan focal (E), les faces de découplage de lumière (4) faisant partie d'un premier et d'au moins un deuxième plan de découplage de lumière (10 et 11), le premier et le deuxième plan de découplage de lumière (10 et 11) étant décalés l'un par rapport à l'autre par rapport au plan focal (E), les guides de lumière (3) étant disposés dans au moins deux rangées disposées l'une au-dessus de l'autre et les faces de découplage de lumière (4) de la rangée la plus haute des guides de lumière (3) étant décalées d'une distance fixée par rapport au plan focal (E) suivant une direction d'irradiation primaire, et/ou
b.) les guides de lumière (3) sont réalisés sous la forme de guides d'ondes optiques, qui sont réalisés sous la forme de corps pleins qui s'étendent ensemble du côté irradiation jusqu'à une plaque avant commune (14) et débouchent du côté avant dans un plan de découplage de lumière (10, 11), deux guides de lumière (3) ajacents l'un à l'autre dans chaque cas se contactant mutuellement dans une zone de contact (12) le long d'une étendue (b, b'), au moins deux des étendues respectives (b et b'), mesurées par rapport au plan focal (E), déviant l'une par rapport à l'autre.

2. Unité d'éclairage selon la revendication 1, **caractérisée par le fait que** toutes les faces de découplage de lumière (4a) dans une rangée sont décalées par rapport aux faces de découplage de lumière (4b) d'une rangée disposée au-dessous par rapport au plan focal (E).

3. Unité d'éclairage selon l'une des revendications 1 ou 2, **caractérisée par le fait que** les guides de lumière (3) sont disposés en exactement trois rangées disposées l'une au-dessus de l'autre.

4. Unité d'éclairage selon l'une des revendications 1 à 3, **caractérisée par le fait que** le premier plan de découplage de lumière (10) et précisément un deuxième plan de découplage de lumière (11) sont décalés l'un par rapport à l'autre par rapport au plan focal (E) tandis que le deuxième plan de découplage de lumière (11) est décalé par rapport au plan focal (E) suivant une direction d'irradiation primaire.

5. Unité d'éclairage selon l'une des revendications précédentes, **caractérisée par le fait que** directement sur les faces de découplage de lumière (4) est prévue une optique de dispersion de lumière, de préférence une optique de dispersion exclusivement horizontale.
